# EUROPEAN PATENT SPECIFICATION

(11) **EP 0 748 837 B1**
(45) Date of publication and mention of the grant of the patent: **02.11.2000**
(21) Application number: 95309424.0
(22) Date of filing: 22.12.1995
(51) Int. Cl.: C08J 11/28, C08K 5/5398, C08L 21/00

(54) **Process for reclaiming elastomeric material**
Verfahren zur Rückgewinnung von Elastomermaterial
Procédé pour la récupération de materiau élastomère

(30) Priority: 15.06.1995 MY 9501624
(43) Date of publication of application: 18.12.1996
(73) Proprietor: STI-K POLYMERS SDN BHD, Kuala Lumpur 50200 (MY)
(72) Inventor: Sekhar, Tan Sri Balachandra Chakkinggal, Selangor (MY); Subramaniam, Anantakrishnan, Dr., 68000 Ampang; Selangor (MY)
(74) Representative: Baverstock, Michael George Douglas

(56) References cited:
- DE-A- 2 752 423
- GB-A- 1 288 616
- US-A- 2 535 931
- INTERNATIONAL POLYMER SCIENCE AND TECHNOLOGY, vol. 7, no. 6, 1980 SHAWBURY GB, pages 59-61, OKAMOTO ET AL. 'Mechanochemical reclamation of comminuted ryre scrap using vulcanisation accelerators'
- DATABASE WPI Section Ch, Week 9150 Derwent Publications Ltd., London, GB; Class A12, AN 91-367135 & SU-A-1 620 454 ( GRITSEVICH V F) , 15 January 1991

## Description

### Field of the Invention

This invention concerns the reclaiming of elastomeric products such as tyres, mouldings, gloves and beltings made from natural rubber or synthetic rubber or blends thereof which were originally vulcanised by the conventional sulphur-accelerated vulcanising systems so that the reclaimed elastomeric material may be recycled.

### Prior Art

Recycling of reclaimed rubber from used rubber products is well-known in the industry where some 200,000 tonnes of recycled rubber is involved. The conventional rubber recycling processes use high temperature and catalysts to digest the elastomeric material being recycled resulting in a high consumption of energy and appreciable degradation of the elastomeric material being reclaimed. Thus, such reclaimed rubber has uses which are restricted by its poor physical properties. A typical reclaimed rubber has tensile strength not more than a 5 to 6 MPa while raw natural rubber with the same compound can provide strengths of over 20 MPa. The conventional process is also labour intensive and is difficult and complicated with respect to quality management and standardisation.

The conventional rubber processes in essence consists of taking vulcanised rubber crumbs, admixing them with catalysts and subjecting the mixture to temperatures of more than 170°C for periods of more than 4 to 6 hours in a digestor. The resulting material is then subjected to mastication until it is rendered into sheet form. Such rubber products are used in small proportions as processing aids or diluents with fresh rubber compounds. The presence of recycled rubber in the mixture will adversely affect the physical and dynamic properties of the final vulcanisate.

Used tyres and other rubber articles are becoming an environmental hazard globally. There is a distinct demand for a satisfactory recycling process to address this ever increasing environmental problem. The used tyre mountains now in existence globally are a fire hazard. Many attempts and approaches have been made to assuage this environmental issue. Among these could be mentioned the use of pelletized tyre crumbs for road surfacing, the burning of such crumbs to generate energy and so on.

It is known that hexamethylene tetramine and resorcinol, in the presence of accelerators, do tend to cut crosslinks in vulcanised rubber and this is reported in literature emanating from Russia or Czechoslovakia. But such a process is uncontrollable and produces variation and degradation in the resultant recycled rubber. While the mechanism of this reaction is not described in detail, it has been suggested that some form of proton transfer reaction is involved although no clear mechanism has been established.

Thus, none of the conventional methods or approaches have succeeded in making any real progress in solving this vexing global problem.

### Objects of the invention

There is required a method of effectively recycling used rubber products entailing a cost effective process which will open up the cross links of the vulcanised rubber network, i.e. delink the cross-linked rubber molecules, in used rubber crumbs without unduly degrading the backbone polymer. The more successfully reclaimed rubber maintains the original physical and dynamic characteristics of original natural and synthetic rubbers, the wider the applicability of such reclaimed rubbers in further rubber manufacturing processes.

### Description of the invention

We have now developed a process which essentially converts used rubber product preferably in the form of crumbs into elastomeric material having properties which approach that of fresh elastomers in similar compounds. This process is elegant, simple and is neither energy nor labour-intensive.

Our process does not use hexamethylene tetramine which is a hazardous chemical to handle. Instead, we have relied on chemicals already used in the conventional rubber manufacturing process.

Our discovery essentially comprises the use of a novel chemical mixture which is capable of initiating in a controlled manner at temperatures below 70°C, preferably below 50°C the opening up or delinking of the vulcanised network of elastomer material.

Accordingly, the present invention provides a process for reclaiming elastomeric material from elemental sulphur-cured elastomeric material, which does not use hexamethylene tetramine, which process comprises treating the said sulphur-cured elastomeric material which has a vulcanised network with one or more rubber accelerators from the following class (A) of accelerators:
(A) zinc salts of dialkyl dithiophosphates; together with one or more rubber accelerators from the following class
(B) of accelerators:
   (B) 2 - mercaptobenzothiazole or derivatives thereof, thiurams, guanidines, 4, 4' dithiomorpholine and sulphenamides,
wherein said combination of accelerators initiate the delinking reaction at temperatures below 70°C preferably below 50°C and there is employed as activator for said reaction zinc oxide, whereby the vulcanised network is opened up or delinked to provide a curable reclaimed elastomeric material, wherein said reclaimed elastomeric material is capable of being vulcanised without the use of additional rubber vulcanising chemicals.

The invention also includes the novel delinking compositions which are described herein.

Our novel chemical composition (hereinafter "Delink") is a composition which is capable of delinking the vulcanised network of sulphur-cured elastomeric material in masterbatch form, which comprises an admixture of one or more rubber accelerators from the following class (A) of accelerators:
(A) zinc salts of dialkyl dithiophosphates; together with one or more rubber accelerators from the following class
(B) of accelerators:
   (B) 2 - mercaptobenzothiazole or derivatives thereof, thiurams, guanidines, 4,4' dithiomorpholineand sulphenamides,
   zinc oxide, as activator for the combination of (A) and (B) accelerators, and an elastomeric material, with the ratio of accelerator plus activator to elastomeric material being in the range of 40:60 to 90:10, on an weight basis. The alkyl groups of the said zinc salts may be C₁ to C₈, preferably C₁ to C₅ alkyl, more preferably butyl.

MBT may be replaced on a molecular basis by other thiazole accelerators such as benzothiazyl disulphide (MBTS) or zinc 2-mercaptobenzothiazole (ZMBT), or by sulphenamide accelerators such as N-cyclohexyl-2-benzothiazole sulphenamide (CBS) or N-tert-butyl-2-benzothiazole sulphenamide (TBBS), or by thiuram accelerators such as tetraethylthiuram disulphide (TETD), tetramethylthiuram disulphide (TMTD) or tetrabenzylthiuram disulphide (TBETD), or by guanidines or other nitrogen-based accelerators especially 4,4' dithiomorpholine or one of the sulphenamides. Some of these accelerators may be less effective than MBT.

The combination of MBT or derivatives of MBT or other class B accelerators and the zinc dialkyl dithiophosphate together with zinc oxide assisted preferably by the presence of stearic acid causes the delinking of the cross-linked rubber molecules; it is believed that this is achieved by scission and then stabilisation of the sulphur crosslinks.

The presence of a small amount of sulphur may be to aid ultimate vulcanisation but is not necessary. Similarly, the presence of diol may help in the dispersion of the powders and perhaps activates the mixture, but is not necessary.

This novel chemical mixture or Delink (the delinking composition hereof), when blended with tyre crumbs or other vulcanised crumbs in concentrations of preferably 6 parts Delink per 100 parts of rubber crumbs on a twin roll mill, effectively delinks the vulcanised network and renders the resulting reclaimed elastomer ready for moulding and vulcanization. The total milling period, which occurs preferably at temperatures below 50°C takes only 7 to 10 minutes. Alternatively, the Delink and tyre crumbs could be first mixed in an intermix and subsequently milled in an open mill. The temperature of the material being treated in the process of this invention should of course be kept at a temperature such that further cross-linking does not occur, e.g. below 120°C, preferably below 100°C.

We have also developed a more convenient method of handling the delinking composition (Delink), i.e. by the masterbatch method. The Delink is first mixed with fresh or reclaimed vulcanised rubber, the ratios of Delink to rubber varying between 90:10 to 40:60. Accordingly the present invention also includes a composition which is capable of delinking the vulcanised network of sulphur-cured elastomeric material in masterbatch form, which comprises an admixture of one or more rubber accelerators from the following class (A) of accelerators:
(A) zinc salts of dialkyl dithiophosphates; together with one or more rubber accelerators from the following class
(B) of accelerators:
   (B) 2 - mercaptobenzothiazole or derivatives thereof, thiurams, guanidines, 4,4' dithiomorpholineand sulphenamides,
   zinc oxide, as activator for the combination of (A) and (B) accelerators, and an elastomeric material, with the ratio of accelerator plus activator to elastomeric material being in the range of 40:60 to 90:10, on an weight basis.

This masterbatch mixture can be mixed with vulcanised crumbs in proportions which will ensure that the ultimate ratio of Delink:rubber is 6:100. Parts are parts by weight.

Some embodiments of the invention will now be described, by way of illustration, with reference to the following Examples and Tables, and the properties of the ensuing compounds illustrate the manner in which this invention is effective in practice.

### Example 1

The following materials are mixed in the given parts by weight:

| | | |
|---|---|---|
| 1. | 2-mercapatobenzothiazol (MBT) | 20.0 |
| 2. | Zinc dibutyl dithiophosphate | 6.0 |
| 3. | Stearic acid | 2.0 |
| 4. | Zinc oxide | 2.0 |
| 5. | Sulphur | 1.5 |
| 6. | Diethylene glycol | 12.0 |

The ingredients are first intimately mixed with vigorous stirring and then the diethylene glycol added to render the whole Delink composition in to a smooth paste.

500g of tyre crumbs are milled in a 2 roll mil for 3 minutes and then 15g of the above composition, i.e. Delink, added. After further milling for 2 minutes another 15g of the Delink is introduced. The final 2 minutes of milling are carried out at narrow nip. By this time, it is possible to sheet out the compound which is ready for vulcanization without the addition of further cross-linking chemicals at 150°C for 15 to 30 minutes. Also a similar result is obtained if the sulphur and diethylene glycol are omitted. Further useful results are also obtained when the amount of the zinc salt is varied from 4 parts to 10 parts by weight.

Properties of the vulcanisates using tyre crumbs originating from Malaysia and Europe are shown in Table 1 below.

**Table 1**

| CHARACTERISTICS OF VULCANISATES prepared from tyre crumbs of 100% natural rubber | | | | | |
|---|---|---|---|---|---|
| No. | Country of origin | Malaysia | | Europe | |
| | Characteristics | 1 | 2 | 3 | 4 |
| 1. | Size (mm) | 0.1-0.5 | 0.1-0.5 | 0.1-0.5 | ≻1.0 |
| 2. | Delink content (parts per hundred of crumb) | 6 | 6 | 6 | 6 |
| 3. | Vulcanisation (°C) | 145 | 150 | 145 | 143 |
| 4. | Mooney viscosity M_{T} ¹⁰⁰ | 65 | 67 | 73 | 118 |
| 5. | Stress at 100% elongation (MPa) | 3 | 3 | 3.5 | 3.5 |
| 6. | Tensile strength (MPa) | 12.0 | 12.8 | 14.4 | 16.1 |
| 7. | Elongation at break (%) | 348 | 348 | 370 | 405 |
| 8. | Elongation set (%) | 15 | 15 | 15 | 12 |

### Example 2

The Delink composition described in Example 1 in this case is incorporated into tyre crumbs and pelletised used gloves, again in the proportion of Delink:vulcanised crumbs at 6:100. The mastication and Delink process are as described in Example 1. the mill temperature is not allowed to exceed 75°C. The total milling time is below 10 minutes. Table 2 below shows the properties obtained from tyre and glove crumbs. For comparison purposes the general properties obtained from fresh rubber both with (tyre compounds) and without fillers (pure gum compounds) are shown in Table 2 below:

**Table 2**

| Properties obtained from scrap tyre treads and scrap gloves in comparison with compounds using fresh rubber | | | | |
|---|---|---|---|---|
| Material type | tyre scrap | scrap glove | fresh rubber (tyre compounds) | fresh rubber (gum compounds) |
| Tensile strength (Mpa) | 12.8 | 14.3 | 18-21 | 21-23 |
| Elongation (%) | 300 | 900 | 350-500 | 700-800 |
| Elongation set (%) | 10 | 15 | - | - |

### Example 3

In this Example, the Delink (as described in Example 1) is admixed with fresh rubber, tyre crumbs and glove crumbs to obtain masterbatches containing 90% Delink and 50% Delink. The masterbatches so produced are then incorporated separately into tyre crumbs and glove crumbs in the manner described under Example 1, except that, in the case of the 90% Delink masterbatch, 6.6 parts of the masterbatch is used for 100 parts of vulcanised crumbs and for the 50% masterbatch. 12 parts per 100 of crumbs are employed.

The above examples are illustrative of the versatility and effectiveness of the process of the present invention to provide recycled rubber compounds from used natural rubber, synthetic rubber vulcanisates and combinations of natural rubber and synthetic rubber vulcanisates.

The resultant reclaimed rubber compounds display satisfactory level of physical and dynamic characteristics. Such compounds can be used directly, i.e. without the use of additional rubber chemicals, in moulded goods or in admixture with fresh compounds. Examples of such goods which have been made using reclaimed elastomer in conventional methods of moulding and vulcanisation are tyres, mats, carpet underlays, electrical insulation layers, industrial tyres, tubings and retreads.

The master batching process can be further refined with use of styrene butadiene rubber in place of natural rubber. With careful control of the Delink incorporation process, the milling process and temperature during mastication, the resultant physical and dynamic characteristics of the final reclaimed compound from tyre and glove wastes can be further enhanced.

The following examples illustrate some cases where MBT is replaced with other accelerators.

### Example 4

The following materials are mixed in the given proportions: -

| | | |
|---|---|---|
| 1. | Benzothiazyl disulphide (MBTS) | 27.8 |
| 2. | Zinc Diethyldithiophosphate | 7.6 |
| 3. | Stearic acid | 5.1 |
| 4. | Zinc oxide | 2.5 |

Then 10 parts of this Delink mix are added to 100 parts of tyre crumbs and 12.5 parts of raw natural rubber as described in Example 1.

### Example 5

The following materials are mixed in the given proportions:-

| | | |
|---|---|---|
| 1. | N-cyclohexyl-2-benzothaizole sulphenamide (CBS) | 43.9 |
| 2. | Zinc Dibutyldithiophosphate | 8.0 |
| 3. | Stearic acid | 5.1 |
| 4. | Zinc oxide | 2.5 |

Then 10 parts of this Delink mix are added to 100 parts of tyre crumbs and 12.5 parts of raw natural rubber as described in Example 1.

### Example 6

The following materials are mixed in the given proportions:-

| | | |
|---|---|---|
| 1. | N-tert-butyl-2-benzothiazole sulphenamide (TBBS) | 39.8 |
| 2. | Zinc diethyldithiophosphate | 7.5 |
| 3. | Stearic acid | 5.1 |
| 4. | Zinc Oxide | 2.5 |

Then 10 parts of this Delink mix are added to 10 parts of tyre crumbs and 12.5 parts of raw natural rubber a described in Example 1.

There are described above novel features which the skilled person in the art will appreciate give rise to advantages. It is to be noted that in addition to or as an alternative to the use of stearic acid there may be used methacrylic acid. Furthermore other acids capable of stabilising the zinc oxide may be used, such as a long chain fatty acid, e.g. acids having from 12 to 22 carbon atoms, or an acid such as 2-ethylhexanoic acid. Also in place of diethylene glycol, there may be used propylene glycol, dipropylene glycol or triethylene glycol as well as other suitable diols which can be identified by simple experimentation.

These are each independent aspects of the present invention, irrespective of whether or not they are included within the scope of the following claims. For example, the ingredients of the "paste" of Example 1 may be varied by plus or minus 20%, preferably by plus or minus 10%. Accordingly, the delinking composition may comprise the a) ingredient such a zinc salt in the range of 4.8 to 7.2 parts by weight and the (b) ingredient such as MTB in the range of 16 to 24 parts by weight. Preferably, there is also present in the delinking composition zinc oxide and stearic acid both in the range 1.6 to 2.4 parts by weight. Further sulphur may be present in the range 1.2 to 1.8 parts by weight and a diol such as diethylene glycol may be present in the range 9.6 to 14.4 parts by weight.

## Claims

1. A process for reclaiming elastomeric material from elemental sulphur-cured elastomeric material, which does not use hexamethylene tetramine, which process comprises treating the said sulphur-cured elastomeric material which has a vulcanised network with one or more rubber accelerators from the following class (A) of accelerators:
(A) zinc salts of dialkyl dithiophosphates; together with one or more rubber accelerators from the following class
(B) of accelerators:
(B) 2 - mercaptobenzothiazole or derivatives thereof, thiurams, guanidines, 4, 4' dithiomorpholine and sulphenamides,
wherein said combination of accelerators initiate the delinking reaction at temperatures below 70°C preferably below 50°C and there is employed as activator for said reaction zinc oxide, whereby the vulcanised network is opened up or delinked to provide a curable reclaimed elastomeric material, wherein said reclaimed elastomeric material is capable of being vulcanised without the use of additional rubber vulcanising chemicals.

2. A process according to claim 1, wherein:-
(a) the zinc dialkyl dithiophosphate is zinc dibutyl dithiophosphate;
(b) the 2 - mercaptobenzothiazole or derivative thereof is zinc mercaptobenzothiazole or benzothiazyl disulphide;
(c) the sulphenamide is N - cyclohexyl 2-benzothiazolesulphenamide or N tertbutyl- 2-benzothiazole sulphenamide;
(d) the thiuram is tetraethylthiuram disulphide, tetramethylthiuram disulphide or tetrabenzylthiuram disulphide.

3. A process according to claim 1 wherein accelerators (A) and (B) comprises a compound from each of the following two classes of accelerators:-
(A) zinc dialkyl dithiophosphates wherein the alkyl is C₁ to C₅ alkyl; together with
(B) 2 mercaptobenzothiazole, zince mercaptobenzothiazole or benzothiazyl disulphide.

4. A process according to claim 3 wherein the two accelerators (A and B) are in the respective molar proportion within the range of 1:1 to 1:12.

5. A process according to any one of the preceding claims wherein the activator component is zinc oxide used in combination with a fatty acid co-activator which is a solubilizing long chain fatty acid, preferably stearic acid.

6. A process according to any one of the preceding claims wherein sulphur is present in the chemicals added prior to the initiation of the delinking process.

7. A process according to any one of the preceding claims wherein a masterbatch comprising a mixture of the rubber accelerators and activator and an elastomeric material is used with the ratio of accelerator plus activator to elastomeric material being in the range of 40:60 to 90:10 on a weight basis.

8. A process according to any of the preceding claims, wherein the accelerator plus activator mixture is mixed with the said elastomeric material in the respective ratio of about 6 parts of the said mixture per 100 parts of the elastomeric material, on a weight basis.

9. A process according to claim 8, wherein the masterbatch is used and the proportion of the masterbatch to elastomeric material is adjusted accordingly to achieve the ratio of mixture to elastomeric materials of 6:100, on a weight basis.

10. A process according to any one of the preceding claims wherein the sulphur-cured elastomeric material is used material and wherein the elastomeric material was derived from natural rubber, synthetic rubber or blends thereof.

11. A process according to any one of the preceding claims wherein the sulphur-cured elastomer material is in the forms of crumbs.

12. A process for producing an article from reclaimed elastomeric material as produced by the process as claimed in any one of the preceding claims, wherein the reclaimed elastomeric material is processed to form an elastomeric product by fabrication, moulding and/or vulcanisation, said article being for example, tyres, car mats, carpet underlays, electrical insulations parts or layers, industrial tyres, tubings or retreads.

13. A composition which is capable of delinking the vulcanised network of sulphur-cured elastomeric material in masterbatch form, which comprises an admixture of one or more rubber accelerators from the following class (A) of accelerators:
(A) zinc salts of dialkyl dithiophosphates; together with one or more rubber accelerators from the following class
(B) of accelerators:
(B) 2 - mercaptobenzothiazole or derivatives thereof, thiurams, guanidines, 4,4' dithiomorpholineand sulphenamides,
zinc oxide, as activator for the combination of (A) and (B) accelerators, and an elastomeric material, with the ratio of accelerator plus activator to elastomeric material being in the range of 40:60 to 90:10, on an weight basis.

14. A composition according to claim 13 wherein:-
(a) the zinc dialkyl dithiophosphate is zinc dialkyl dithiophosphate, wherein the alkyl is C₁ to C₅ alkyl;
(b) the 2 - mercaptobenzothiazole or derivative thereof is zinc mercaptobenzothiazole or benzothiazyl disulphide;
(c) the sulphenamide is N - cyclohexyl 2-benzothiazolesulphenamide or N tertbutyl- 2-benzothiazole sulphenamide;
(d) the thiuram is tetraethylthiuram disulphide, tetramethylthiuram disulphide or tetrabenzylthiuram disulphide.

15. A composition according to claim 13 wherein accelerators (A) and (B) comprises a compound from each of the following two classes of accelerators:-
(A) zinc dialkyl dithiophosphates wherein the alkyl is C₁ to C₅ alkyl; together with
(B) 2 mercaptobenzothiazole, zince mercaptobenzothiazole or benzothiazyl disulphide.

16. A composition according to any one of claims 13 to 15 wherein the two accelerators (A and B) are in the respective molar proportion within the range of 1:1 to 1:12.

17. A composition according to any one of claims 13 to 16 wherein the activator component is zinc oxide used in combination with a co-activator which is a long chain fatty acid, preferably stearic acid.

18. A composition as claimed in any one of claims 13 to 17, wherein the elastomeric material is fresh rubber or crumbs from a vulcanised product.

19. Reclaimed elastomeric material produced from elemental sulphur-cured elastomeric material, wherein the vulcanised network has been opened up or delinked using a zinc dialkyl dithiophosphate to provide a curable reclaimed elastomeric material, wherein said reclaimed elastomeric material is capable of being vulcanised without the use of additional rubber vulcanising chemicals.

## Patentansprüche

1. Verfahren zur Rückgewinnung von elastomerem Material aus einem mit elementarem Schwefel gehärteten elastomeren Material, wobei Hexamethylentetramin nicht verwendet wird, wobei das Verfahren das Behandeln des mit Schwefel-gehärteten elastomeren Materials, welches ein vulkanisiertes Netzwerk aufweist, mit einem oder mehreren Vulkanisationsbeschleunigern aus der folgenden Klasse (A) von Beschleunigern:
(A) Zinksalze von Dialkyldithiophosphaten; zusammen mit einem oder mehreren Vulkanisationsbeschleunigern aus der folgenden Klasse (B) von Beschleunigern:
(B) 2-Mercaptobenzothiazol oder Derivate davon, Thiurame, Guanidine, 4,4'-Dithiomorpholin und Sulfenamide umfaßt,
worin die Kombination der Beschleuniger die Entnetzungsreaktion bei Temperaturen unterhalb 70 °C, bevorzugt unterhalb 50 °C initiiert und als Aktivator für die Reaktion Zinkoxid eingesetzt wird, wobei das vulkanisierte Netzwerk geöffnet oder entnetzt wird, um ein härtbares rückgewonnenes elastomeres Material zu ergeben, worin das rückgewonnene elastomere Material ohne die Verwendung von zusätzlichen Gummivulkanisierungschemikalien vulkanisiert werden kann.

2. Verfahren nach Anspruch 1, worin:
(a) das Zinkdialkyldithiophosphat Zinkdibutyldithiophosphat ist;
(b) das 2-Mercaptobenzothiazol oder Derivat davon Zinkmercaptobenzothiazol oder Benzothiazyldisulfid ist;
(c) das Sulfenamid N-Cyclohexyl-2-benzothiazolsulfenamid oder N-tert-Butyl-2-benzothiazolsulfenamid ist;
(d) das Thiuram Tetraethylthiuramdisulfid, Tetramethylthiuramdisulfid oder Tetrabenzylthiuramdisulfid ist.

3. Verfahren nach Anspruch 1, worin die Beschleuniger (A) und (B) jeweils eine Verbindung der folgenden zwei Klassen von Beschleunigern umfassen:
(A) Zinkdialkyldithiophosphate, worin das Alkyl ein C₁ bis C₅-Alkyl ist; zusammen mit
(B) 2-Mercaptobenzothiazol, Zinkmercaptobenzothiazol oder Benzothiazyldisulfid.

4. Verfahren nach Anspruch 3, worin die zwei Beschleuniger (A und B) im jeweiligen molaren Verhältnis innerhalb des Bereichs von 1 : 1 bis 1 : 12 vorliegen.

5. Verfahren nach einem der vorhergehenden Ansprüche, worin die Beschleunigerkomponente Zinkoxid ist, verwendet in Kombination mit einem Fettsäurecoaktivator, welcher eine solubilisierende langkettige Fettsäure, bevorzugt Stearinsäure ist.

6. Verfahren nach einem der vorhergehenden Ansprüche, worin Schwefel in den vor der Initiierung des Entnetzungsvorgangs zugegebenen Chemikalien vorhanden ist.

7. Verfahren nach einem der vorhergehenden Ansprüche, worin ein Masterbatch umfassend ein Gemisch der Vulkanisationsbeschleuniger und den Aktivator und ein elastomeres Material verwendet wird, wobei das Verhältnis von Beschleuniger plus Aktivator zu Elastomermaterial im Bereich von 40 : 60 bis 90 : 10 auf Gewichtsbasis ist.

8. Verfahren nach einem der vorhergehenden Ansprüche, worin das Gemisch aus Beschleuniger plus Aktivator mit dem elastomeren Material im jeweiligen Verhältnis von etwa 6 Teilen des Gemisches pro 100 Teilen des elastomeren Materials auf Gewichtsbasis vermischt wird.

9. Verfahren nach Anspruch 8, worin der Masterbatch verwendet wird und das Verhältnis von Masterbatch zu elastomerem Material entsprechend eingestellt wird, um ein Verhältnis von Gemisch zu elastomeren Materialien von 6 : 100 auf Gewichtsbasis zu erzielen.

10. Verfahren nach einem der vorhergehenden Ansprüche, worin das Schwefel-gehärtete elastomere Material ein gebrauchtes Material ist und worin das elastomere Material von natürlichem Gummi, synthetischem Gummi oder Gemischen davon stammt.

11. Verfahren nach einem der vorhergehenden Ansprüche, worin das Schwefel-gehärtete elastomere Material in Form von Krümeln vorliegt.

12. Verfahren zur Herstellung eines Gegenstandes aus rückgewonnenem elastomerem Material, erhältlich durch das Verfahren nach einem der vorhergehenden Ansprüche, worin das rückgewonnene elastomere Material verarbeitet wird, um ein elastomeres Produkt durch Fertigung, Formgebung und/oder Vulkanisation zu bilden, wobei der Gegenstand z.B. Reifen, Automatten, Teppichunterlagen, elektrische Isolierungsteile oder -schichten, Industriereifen, Rohrmaterialien oder runderneuerte Reifen ist.

13. Zusammensetzung, welche in der Lage ist, das vulkanisierte Netzwerk eines Schwefel-gehärteten elastomeren Materials zu entnetzen, in Masterbatchform, welche ein Gemisch von einem oder mehreren Vulkanisationsbeschleunigern aus der folgenden Klasse (A) von Beschleunigern:
(A) Zinksalze von Dialkyldithiophosphaten; zusammen mit einem oder mehreren Vulkanisationsbeschleunigern aus der folgenden Klasse (B) von Beschleunigern:
(B) 2-Mercaptobenzothiazol oder Derivate davon, Thiurame, Guanidine, 4,4'-Dithiomorpholin und Sulfenamide,
Zinkoxid als Aktivator für die Kombination der Beschleuniger (A) und (B) und ein eiastomeres Material umfaßt, wobei das Verhältnis von Beschleuniger plus Aktivator zu elastomerem Material im Bereich von 40 : 60 bis 90 : 10 auf Gewichtsbasis liegt.

14. Zusammensetzung nach Anspruch 13, worin:
(a) das Zinkdialkyldithiophosphat ein Zinkdialkyldithiophosphat ist, worin das Alkyl ein C₁- bis C₅-Alkyl ist;
(b) das 2-Mercaptobenzothiazol oder Derivat davon Zinkmercaptobenzothiazol oder Benzothiazyldisulfid ist;
(c) das Sulfenamid N-Cyclohexyl-2-benzothiazolsulfenamid oder N-tert-Butyl-2-benzothiazolsulfenamid ist;
(d) das Thiuram Tetraethylthiuramdisulfid, Tetramethylthiuramdisulfid oder Tetrabenzylthiuramdisulfid ist.

15. Zusammensetzung nach Anspruch 13, worin die Beschleuniger (A) und (B) jeweils eine Verbindung der folgenden zwei Klassen von Beschleunigern umfassen:
(A) Zinkdialkyldithiophosphate, worin das Alkyl ein C₁- bis C₅-Alkyl ist; zusammen mit
(B) 2-Mercaptobenzothiazol, Zinkmercaptobenzothiazol oder Benzothiazyldisulfid.

16. Zusammensetzung nach einem der Ansprüche 13 bis 15, worin die zwei Beschleuniger (A und B) im jeweiligen molaren Verhältnis innerhalb des Bereichs von 1 : 1 bis 1 : 12 vorliegen.

17. Zusammensetzung nach einem der Ansprüche 13 bis 16, worin die Aktivatorkomponente Zinkoxid ist, verwendet in Verbindung mit einem Coaktivator, welcher eine langkettige Fettsäure, bevorzugt Stearinsäure, ist.

18. Zusammensetzung nach einem der Ansprüche 13 bis 17, worin das elastomere Material frischer Gummi oder Krümel von einem vulkanisierten Produkt ist.

19. Rückgewonnenes elastomeres Material, hergestellt aus mit elementarem Schwefel gehärtetem elastomerem Material, worin das vulkanisierte Netzwerk unter Verwendung eines Zinkdialkyldithiophosphats geöffnet oder entnetzt worden ist, um ein härtbares rückgewonnenes elastomeres Material zu ergeben, worin das rückgewonnene elastomere Material ohne die Verwendung von zusätzlichen Gummivulkanisierungschemikalien vulkanisiert werden kann.

## Revendications

1. Procédé pour régénérer une matière élastomère à partir d'une matière élastomère vulcanisée par le soufre élémentaire, qui n'utilise pas d'hexaméthylène-tétramine, procédé qui comprend le traitement de ladite matière élastomère vulcanisée par le soufre qui comporte un réseau vulcanisé avec un ou plusieurs accélérateurs pour caoutchoucs, choisis dans la catégorie (A) suivante d'accélérateurs :
(A) des sels de zinc de dialkyldithiophosphates ; conjointement avec un ou plusieurs accélérateurs pour caoutchoucs, choisis dans la catégorie (B) suivante d'accélérateurs :
(B) le 2-mercaptobenzothiazole ou ses dérivés, des thiurames, des guanidines, la 4,4'-dithiomorpholine et des sulfénamides,
dans lequel ladite association d'accélérateurs déclenche la réaction de déréticulation à des températures inférieures à 70°C, de préférence inférieures à 50°C, et on utilise comme activateur pour ladite réaction de l'oxyde de zinc, le réseau vulcanisé étant ainsi ouvert ou déréticulé pour produire une matière élastomère régénérée vulcanisable, ladite matière élastomère régénérée étant apte à vulcanisation sans utiliser d'agents chimiques supplémentaires de vulcanisation des caoutchoucs.

2. Procédé suivant la revendication 1, dans lequel :
(a) le dialkyldithiophosphate de zinc consiste en dibutyldithiophosphate de zinc ;
(b) le 2-mercaptobenzothiazole ou son dérivé consiste en zinc-mercaptobenzothiazole ou disulfure de benzothiazyle ;
(c) le sulfénamide consiste en N-cyclohexyl-2-benzothiazolesulfénamide ou N-tertio-butyl-2-benzothiazolesulfénamide ;
(d) le thiurame consiste en disulfure de tétraéthylthiurame, disulfure de tétraméthylthiurame ou disulfure de tétrabenzylthiurame.

3. Procédé suivant la revendication 1, dans lequel les accélérateurs (A) et (B) comprennent un composé choisi dans chacune des deux catégories suivantes d'accélérateurs :
(A) des dialkyldithiophosphates de zinc dans lesquels le groupe alkyle est un groupe alkyle en C₁ à C₅ ; conjointement avec
(B) le 2-mercaptobenzothiazole, le zinc-mercaptobenzothiazole ou le disulfure de benzothiazyle.

4. Procédé suivant la revendication 3, dans lequel les deux accélérateurs (A et B) sont présents en des proportions molaires respectives comprises dans l'intervalle de 1:1 à 1:12.

5. Procédé suivant l'une quelconque des revendications précédentes, dans lequel le constituant activateur est l'oxyde de zinc utilisé en association avec un co-activateur consistant en un acide gras qui est un acide gras solubilisant à chaîne longue, de préférence l'acide stéarique.

6. Procédé suivant l'une quelconque des revendications précédentes, dans lequel le soufre est présent dans les agents chimiques ajoutés avant le début du procédé de déréticulation.

7. Procédé suivant l'une quelconque des revendications précédentes, dans lequel un mélange maître comprenant un mélange des accélérateurs pour caoutchoucs et d'un activateur ainsi qu'une matière élastomère est utilisé, le rapport de l'accélérateur plus activateur à la matière élastomère étant compris dans l'intervalle de 40:60 à 90:10 sur base pondérale.

8. Procédé suivant l'une quelconque des revendications précédentes, dans lequel le mélange accélérateur plus activateur est mélangé à la matière élastomère en un rapport respectif d'environ 6 parties dudit mélange pour 100 parties de la matière élastomère, sur base pondérale.

9. Procédé suivant la revendication 8, dans lequel le mélange maître est utilisé et la proportion du mélange maître par rapport à la matière élastomère est ajustée en conséquence pour parvenir à un rapport du mélange aux matières élastomères de 6:100, sur base pondérale.

10. Procédé suivant l'une quelconque des revendications précédentes, dans lequel la matière élastomère vulcanisée par le soufre est un matériau usagé et dans lequel la matière élastomère a été obtenue à partir de caoutchouc naturel, de caoutchouc synthétique ou de leurs mélanges.

11. Procédé suivant l'une quelconque des revendications précédentes, dans lequel la matière élastomère vulcanisée par le soufre est sous forme de fragments.

12. Procédé pour la production d'un article à partir d'une matière élastomère régénérée produite par le procédé suivant l'une quelconque des revendications précédentes, dans lequel la matière élastomère régénérée est traitée pour former un produit élastomère par fabrication, moulage et/ou vulcanisation, ledit article consistant, par exemple, en bandages pneumatiques, tapis pour automobiles, sous-couches de tapis, pièces ou couches d'isolation électrique, bandages pneumatiques industriels, tubes ou éléments de rechapage de bandages pneumatiques.

13. Composition qui est apte à la déréticulation du réseau vulcanisé d'une matière élastomère vulcanisée par le soufre sous forme d'un mélange maître, qui comprend un mélange d'un ou plusieurs accélérateurs pour caoutchoucs choisis dans la catégorie (A) suivante d'accélérateurs :
(A) des sels de zinc de dialkyldithiophosphates ; conjointement avec un ou plusieurs accélérateurs pour caoutchoucs, choisis dans la catégorie (B) suivante d'accélérateurs :
(B) le 2-mercaptobenzothiazole ou ses dérivés, des thiurames, des guanidines, la 4,4'-dithiomorpholine et des sulfénamides,
d'oxyde de zinc, comme activateur pour l'association des accélérateurs (A) et (B), et d'une matière élastomère, le rapport de l'accélérateur plus activateur à la matière élastomère étant compris dans l'intervalle de 40:60 à 90:10, sur base pondérale.

14. Composition suivant la revendication 13, dans laquelle :
(a) le dialkyldithiophosphate de zinc consiste en un dialkyldithiophosphate de zinc dans lequel le groupe alkyle est un groupe alkyle en C₁ à C₅ ;
(b) le 2-mercaptobenzothiazole ou son dérivé consiste en zinc-mercaptobenzothiazole ou disulfure de benzothiazyle ;
(c) le sulfénamide consiste en N-cyclohexyl-2-benzothiazolesulfénamide ou N-tertio-butyl-2-benzothiazolesulfénamide ;
(d) le thiurame consiste en disulfure de tétraéthylthiurame, disulfure de tétraméthylthiurame ou disulfure de tétrabenzylthiurame.

15. Composition suivant la revendication 13, dans lequel les accélérateurs (A) et (B) comprennent un composé de chacune des deux catégories suivantes d'accélérateurs :
(A) des dialkyldithiophosphates de zinc dans lesquels le groupe alkyle est un groupe alkyle en C₁ à C₅; conjointement avec
(B) le 2-mercaptobenzothiazole, le zinc-mercaptobenzothiazole ou le disulfure de benzothiazyle.

16. Composition suivant l'une quelconque des revendications 13 à 15, dans laquelle les deux accélérateurs (A et B) sont présents en des proportions molaires respectives comprises dans l'intervalle de 1:1 à 1:12.

17. Composition suivant l'une quelconque des revendications 13 à 16, dans laquelle le constituant activateur est l'oxyde de zinc utilisé en association avec un co-activateur qui est un acide gras à chaîne longue, de préférence l'acide stéarique.

18. Composition suivant l'une quelconque des revendications 13 à 17, dans laquelle la matière élastomère consiste en caoutchouc frais ou fragments de caoutchouc provenant d'un produit vulcanisé.

19. Matière élastomère régénérée produite à partir d'une matière élastomère vulcanisée par le soufre élémentaire, dans laquelle le réseau vulcanisé a été ouvert ou déréticulé en utilisant un dialkyldithiophosphate de zinc pour produire une matière élastomère régénérée vulcanisable, ladite matière élastomère régénérée étant apte à la vulcanisation sans utiliser d'agents chimiques supplémentaires de vulcanisation du caoutchouc.
